(19) Europäisches Patentamt

European Patent Office

Office européen des brevets

(11) **EP 2 360 633 A1**

(12) **DEMANDE DE BREVET EUROPEEN**

(43) Date de publication:
    **24.08.2011 Bulletin 2011/34**

(51) Int Cl.:
    *G06Q 10/00* [(2006.01)]      *G06Q 50/00* [(2006.01)]

(21) Numéro de dépôt: **11154000.1**

(22) Date de dépôt: **10.02.2011**

(84) Etats contractants désignés:
    **AL AT BE BG CH CY CZ DE DK EE ES FI FR GB
    GR HR HU IE IS IT LI LT LU LV MC MK MT NL NO
    PL PT RO RS SE SI SK SM TR**
    Etats d'extension désignés:
    **BA ME**

(30) Priorité: **11.02.2010  FR 1000577**

(71) Demandeur: **Exprimm
    78180 Montigny Le Bretonneux (FR)**

(72) Inventeurs:
    • **Peretti, Mathieu
      78450, VILLEPREUX (FR)**
    • **Hu, Wen
      78000, VERSAILLES (FR)**
    • **Lefevre, Ian
      91800, BRUNOY (FR)**

(74) Mandataire: **Callon de Lamarck, Jean-Robert et al
    Cabinet Regimbeau
    20 rue de Chazelles
    75847 Paris cedex 17 (FR)**

(54)    **Suivi et évaluation de la consommation énergétique d'un ouvrage**

(57)    L'invention concerne un procédé pour le suivi et l'évaluation de la consommation et l'efficacité énergétiques d'au moins un ouvrage, comprenant les étapes de :
- mesure (E01) par des premiers capteurs (1) adaptés de valeurs de consommation d'énergie et d'efficacité énergétique (Vcm) sur une première période (i) et à intervalles réguliers ;
- mesure (E04) par des deuxièmes capteurs (4) adaptés de valeurs de variables (Vvm) ayant une influence sur la consommation et l'efficacité énergétiques sur la première période (i) et à intervalles réguliers ;

- entrée (E07) de valeurs de paramètres (Vpe) ayant une influence sur la consommation et l'efficacité énergétiques de l'ouvrage et considéré comme vraies sur la première période (i) ;
- prévision (E10) par un module de prévision (10) d'une consommation et de l'efficacité énergétiques ($Cp_{i+1}$) pour une deuxième période (i+1) postérieure à la première période (i) à partir des valeurs de consommation d'énergie et d'efficacité énergétique (Vcm) archivées, des valeurs de variables (Vvm) archivées et des valeurs de paramètres (Vpe) entrées.

FIG. 1

EP 2 360 633 A1

**Description**

Domaine de l'invention

L'invention concerne le domaine du suivi et de l'évaluation de la consommation énergétique d'un ouvrage.

Plus particulièrement, elle propose un procédé et un système pour mesurer la performance énergétique de l'ouvrage dans la durée.

État de la technique

La préservation de l'environnement est devenue un enjeu majeur pour l'ensemble des communautés internationales. Elle revêt divers aspects dont la réduction de la consommation énergétique et la diminution des gaz à effet de serre comme le dioxyde de carbone.

En outre, dans certaines parties du monde, les instances dirigeantes se fixent des objectifs chiffrés : par exemple, une réduction de 20% de la consommation énergétique d'ici 2020 pour l'Union Européenne.

Le domaine du bâtiment et travaux publiques, BTP, (ouvrages avec ou sans enveloppe extérieure) représente un des grands postes d'économie d'énergie à l'échelle de la consommation mondiale.

C'est dans ce contexte que le développement d'un procédé et d'un système pour le suivi et l'évaluation de la consommation énergétique de l'ouvrage paraît aujourd'hui opportun et indispensable. Ce système sera doté d'une capacité d'acquisition et d'archivage à long terme, de moyens d'analyse statistique, de modélisation et de prévision.

Un type de système existant et connu est la GTC (gestion technique centralisée), répandue dans l'automatisme industriel, sous le nom anglo-saxon de *SCADA* (acronyme de *Supervisiory Control And Data Acquisition* ou contrôle de supervision et acquisition de données en français). Cette technique a été introduite dans le domaine du bâtiment et y est devenue la « GTB » pour « gestion technique du bâtiment », ou le *BAS* « *Building Automation Systems* » en anglais (ISO 16484).

Le système GTB a pour objectifs de surveiller, piloter, et programmer le fonctionnement d'équipements techniques Il a également pour objectif de détecter d'éventuels dysfonctionnements des installations, grâce à de multiples capteurs et actionneurs reliés aux équipements.

Cette technique évolue avec l'apparition de capteurs communicants et intelligents, qui facilitent et fiabiliser la collecte et la centralisation de information

Présentation de l'invention

Un but de l'invention est de proposer un procédé permettant une évaluation objective et fiable à long terme de la consommation et de l'efficacité énergétique d'un ouvrage, et de mettre ainsi en place un outil d'aide à la décision.

Pour cela, l'invention propose un procédé pour le suivi et la prévision de la consommation et l'efficacité énergétiques d'au moins un ouvrage, comprenant les étapes de :

- mesure par des premiers capteurs adaptés de valeurs de consommation énergétique sur une première période et à intervalles réguliers ;
- archivage des valeurs de consommation énergétique mesurées dans un premier serveur d'archivage ;
- mesure par des deuxièmes capteurs adaptés de valeurs de variables ayant une influence sur la consommation énergétique sur la première période et à intervalles réguliers ;
- archivage des valeurs de variables mesurées dans un deuxième serveur d'archivage ;
- entrée de valeurs de paramètres ayant une influence sur la consommation énergétique de l'ouvrage et considéré comme vraies sur la première période ;
- prévision par un module de prévision d'une consommation énergétique pour une deuxième période postérieure à la première période à partir des valeurs de consommation énergétique archivées, des valeurs de variables archivées et des valeurs de paramètres entrées.

En associant par des méthodes déterministes ou statistiques, les différents facteurs d'influence tels que le rendement des installations, la performance de l'enveloppe de l'ouvrage si celui-ci est couvert, la performance des systèmes de récupération, les profils d'utilisation et les données climatiques aux consommations énergétiques résultantes, cela permet d'aboutir sur des modèles de prévisions suffisamment fiables pour comparer la performance de tout ouvrage connecté au système en les replaçant dans un seul et même contexte virtuel.

D'autres caractéristiques optionnelles et non limitatives du procédé sont :

- le procédé comprend en plus une étape de correction par un module de correction des valeurs de variables aberrantes avant leur archivage ;
- l'étape de correction comprend :

   ■ une sous-étape d'identification et suppression des valeurs de variables aberrantes par une unité d'identification et suppression ; et
   ■ une sous-étape de remplacement de ces valeurs de variables aberrantes par d'autres valeurs obtenues via une méthode déterministe ou empirique par une unité de remplacement ;

- le procédé comprend en plus une étape de simulation par un simulateur d'une consommation énergétique simulée sur la première période à partir des valeurs de variables archivées et des valeurs de paramètres et selon un modèle de simulation ;

- le procédé comprend en plus une étape de comparaison par un comparateur d'un rapport à un seuil, le rapport étant déterminé en fonction d'une consommation énergétique mesurée, obtenue à partir des valeurs de consommation énergétique mesurées, et de la consommation énergétique simulée ;
- le procédé comprend en plus une étape de modification du modèle de simulation par un module de modification si le rapport est supérieur au seuil, et une itération de l'étape de simulation par le simulateur selon le modèle de simulation modifié, ainsi que de l'étape de comparaison tant que le rapport est supérieur au seuil ; et
- l'étape de prévision est réalisée lorsque le rapport est inférieur au seuil à partir d'au moins une partie des valeurs de variables mesurées, d'au moins une partie des valeurs de paramètres entrées, de valeurs de variables actualisées et de valeurs de paramètres actualisées.

L'invention propose également un système pour le suivi et la prévision de la consommation énergétique d'au moins un ouvrage, comprenant :

- au moins un premier capteur adapté à la mesure de valeurs de consommation énergétique;
- un premier serveur d'archivage pour l'archivage des valeurs de consommation énergétique mesurées par le capteur ;
- au moins un deuxième capteur adapté à la mesure de valeurs de variables ayant une influence sur la consommation énergétique ;
- un deuxième serveur d'archivage pour l'archivage des valeurs de variables mesurées par le deuxième capteur ; et
- un module de prévision pour la prévision d'une consommation énergétique pour une deuxième période postérieure à la première période à partir des valeurs de consommation énergétique archivées, des valeurs de variables archivées et de valeurs de paramètres entrées.

Les caractéristiques optionnelles et non limitatives du système sont :

- le système comprend en outre un module de correction pour la correction de valeurs de variables aberrantes avant leur archivage ; et
- le système comprend en outre :

  ■ un simulateur pour la simulation d'une consommation énergétique simulée sur la première période à partir des valeurs de variables archivées et des valeurs de paramètres et selon un modèle de simulation ;
  ■ un comparateur pour la comparaison d'un rapport à un seuil, le rapport étant déterminé en fonction d'une consommation énergétique mesurée, obtenue à partir des valeurs de consommation énergétique mesurées, et de la consommation énergétique simulée ; et

- un module de modification pour la modification du modèle de simulation si le rapport est supérieur au seuil.

Présentation des figures

D'autres caractéristiques, buts et avantages apparaîtront à la lecture de la description détaillée qui suit, en référence aux dessins donnés à titre illustratif et non limitatif, parmi lesquels :

- la figure 1 illustre schématiquement un diagramme d'une mise en oeuvre possible de l'invention ;
- la figure 2 illustre schématiquement une application possible de l'invention ; et
- la figure 3 illustre un mode de réalisation possible du système de l'invention.

Description détaillée

Dans le reste de la description, le terme « ouvrage » désigne un bâtiment ou un édifice non couvert, tel qu'un pont. Le terme « ouvrage » peut également désigner un ensemble de bâtiments et/ou d'édifices non couverts.

Les périodes **i, i+1** se succédant peuvent être des années, des mois, des semaines, voire des jours. Ces périodes peuvent également être un regroupement de plusieurs années, mois, semaines ou jours. Enfin, deux périodes se succédant peuvent être disjointes ou se chevaucher.

*Système*

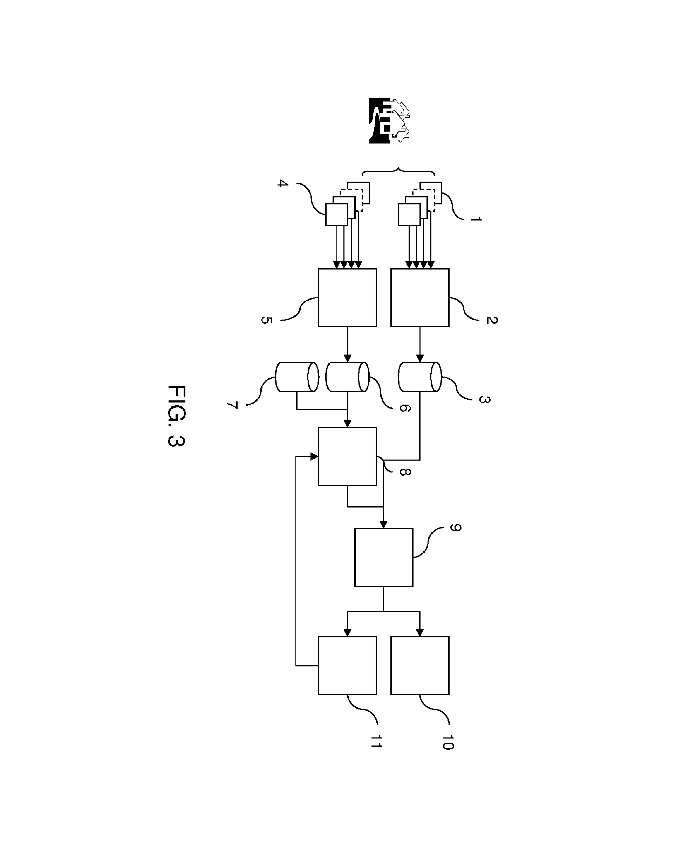

En référence à la figure 3, un système pour le suivi et la prévision de la consommation énergétique d'au moins un ouvrage est ci-après décrit.

Le système comprend au moins un premier capteur **1** adapté à la mesure de valeurs de consommation énergétique **Vcm** à intervalle de temps régulier sur l'ouvrage.

Ces valeurs de consommation énergétique **Vcm** peuvent être des valeurs correspondant à une consommation d'électricité (puissance électrique appelée par exemple), de gaz (débit, volume...), d'eau froide (débit, température, température aller-retour, puissance frigorifique...), d'eau chaude (débit, température aller-retour, puissance calorifique...), voire aussi consommation de frigorigène, ou de déchets.

Le système peut comprendre un premier serveur d'archivage **3** pour l'archivage des valeurs de consommation énergétique **Vcm** mesurées par le capteur **1.**

Le système comprend aussi au moins un deuxième capteur **4** adapté à la mesure à intervalles de temps réguliers sur l'ouvrage, de valeurs de variables **Vvm** ayant une influence sur la consommation et l'efficacité énergétiques de l'ouvrage.

Ces valeurs de variables **Vvm** peuvent être relatives à une utilisation : l'état et la durée de fonctionnement d'équipements de production thermique ; l'état et la durée de fonctionnement des d'équipements d'émission et de diffusion ; l'état et la durée de fonctionnement des circulateurs ; l'état et la durée de fonctionnement des équipements bureautiques ; l'état et la durée de fonctionnement des équipements électroménagers ; l'état et la durée de fonctionnement du système d'éclairage électrique ; le profil d'occupation du bâtiment (densité, durée de présence...) ; le taux de renouvellement d'air du bâtiment (débit...).

Les valeurs de variables **Vvm** peuvent en outre être relatives à la météorologie, en particulier à la température sèche de l'air extérieur, à l'humidité extérieure, au rayonnement solaire, à la température de la voûte céleste et au vent (vitesse et direction).

Le système comprend un deuxième serveur d'archivage **6** pour l'archivage des valeurs de variables mesurées **Vvm** par le deuxième capteur **4.**

Les premier et deuxième serveurs d'archivage **3, 6** peuvent être différents ou être un seul et même serveur d'archivage.

Le système peut également comprendre un serveur d'archivage centralisé vers lequel sont envoyées les mesures archivées dans les premier et deuxième serveurs d'archivage **3, 6.** Dans ce cas, les premier et deuxième serveurs d'archivage **3, 6,** peuvent être locaux et reliés à distance via un réseau (par exemple Ethernet ou Internet) au serveur d'archivage centralisé.

Le système comprend un module de prévision **10** pour la prévision d'une consommation énergétique $Cp_{i+1}$ pour une deuxième période **i+1** postérieure à la première période i à partir des valeurs de consommation énergétique **Vcm** archivées, des valeurs de variables **Vvm** archivées et de valeurs de paramètres **Vpe** entrées.

Les valeurs de paramètres **Vpe** sont relatives à des informations sur des paramètres fixes pour une période ou du moins qui ne varient que très peu, par exemple la transmission thermique et la perméabilité des parois, le type et la configuration physique des équipements énergétiques ...

Le système peut comprendre en outre un module de correction 5 pour la correction de valeurs de variables aberrantes avant leur archivage.

Le système peut comprendre en outre un ou plusieurs éléments parmi :

- un simulateur **8** pour la simulation d'une consommation énergétique simulée $Cs_i$ sur la première période i à partir des valeurs de variables **Vvm** archivées et des valeurs de paramètres **Vpe** et selon un modèle de simulation ;

- un comparateur **9** pour la comparaison d'un rapport ∆**C%** à un seuil **S,** le rapport ∆**C%** étant calculé en divisant une différence relative $|Cm_i - Cs_i|$ entre une consommation énergétique mesurée $Cm_i$, obtenue à partir des valeurs de consommation énergétique mesurées **Vcm,** et la consommation énergétique simulée $Cs_i$ par la consommation énergétique mesurée $Cm_i$

$$\Delta C\% = 100 \cdot \left| \frac{Cm_i - Cs_i}{Cm_i} \right|$$

- un module de modification **11** pour la modification du modèle de simulation si le rapport ∆**C%** est supérieur au seuil **S.**

Le simulateur **8** peut être choisi parmi des logiciels de simulations reconnus: DOE-2, EnergyPlus et TRNSYS par exemple.

Le simulateur **8** peut être relié aux serveurs d'archivage **2, 5** ou au serveur d'archivage centralisé directement ou à distance avec la technologie *Cloud Computing* (Informatique dans les nuages, littéralement en français).

*Procédé*

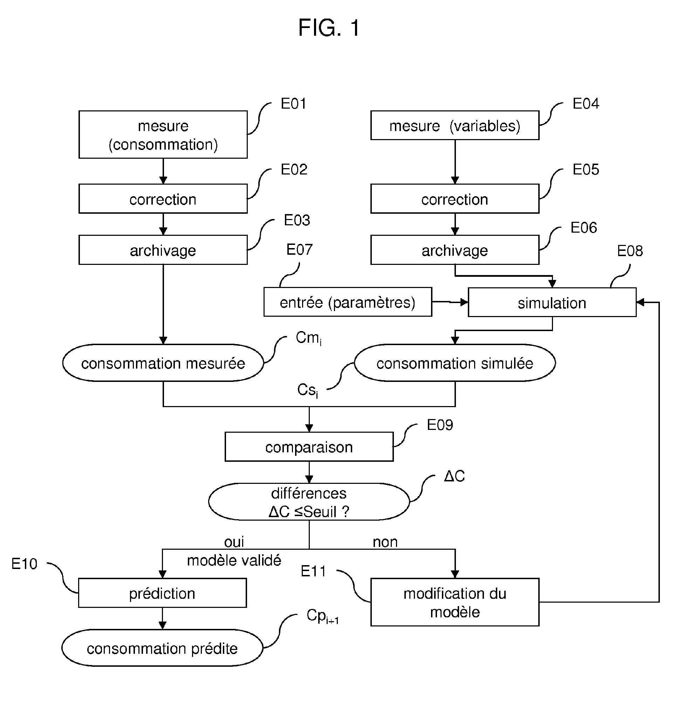

En référence à la figure 1, le procédé comprend principalement les étapes de

- mesure **E01** par des premiers capteurs **1** adaptés pour la mesure de valeurs de consommation énergétique **Vcm** sur une première période **i** et à intervalles réguliers ;
- archivage **E03** des valeurs de consommation énergétique mesurées **Vcm** dans un premier serveur d'archivage **3 ;**
- mesure **E04** par des deuxièmes capteurs **4** adaptés de valeurs de variables **Vvm** ayant une influence sur la consommation énergétique sur la première période i et à intervalle régulier ;
- archivage **E06** des valeurs de variables mesurées **Vvm** dans un deuxième serveur d'archivage **6 ;**
- entrée **E07** de valeurs de paramètres **Vpe** ayant une influence sur la consommation énergétique de l'ouvrage et considéré comme vraies sur la première période **i ;** et
- prévision **E10** par un module de prévision **10** d'une consommation énergétique $Cp_{i+1}$ pour une deuxième période **i+1** postérieure à la première période **i** à partir des valeurs de consommation énergétique **Vcm** archivées, des valeurs de variables **Vvm** archivées et des valeurs de paramètres **Vpe** entrées.

Toujours en référence à la figure 1 est décrit ci-après un exemple de procédé pour le suivi et la prévision de la consommation énergétique d'au moins un ouvrage.

Le procédé de la figure 1 comprend l'établissement d'un bilan de la consommation mesurée **Cm$_i$** sur la première période **i.** Ce bilan est établi grâce aux étapes suivantes :

- mesure **E01** par les premiers capteurs **1** adaptés pour la mesure de valeurs de consommation énergétique **Vcm** sur la première période i et à intervalles réguliers ;
- correction **E02** par un module de correction **2** des valeurs de consommation énergétique aberrantes avant leur archivage **E03 ;**
- archivage **E03** des valeurs de consommation énergétique mesurées **Vcm** dans un premier serveur d'archivage **3.**

L'archivage des valeurs de consommation énergétique **Vcm** permet l'établissement du bilan de la consommation mesurée **Cm$_i$** sur la première période **i.**

Le procédé de la figure 1 comprend également l'établissement d'un bilan de la consommation simulée **Cs$_i$** sur la première période **i.** Ce bilan est établi grâce aux étapes suivantes :

- mesure **E04** par les deuxièmes capteurs **4** adaptés de valeurs de variables **Vvm** ayant une influence sur la consommation énergétique sur la première période i et à intervalles réguliers ;
- correction **E05** par un module de correction 5 des valeurs de variables aberrantes avant leur archivage **E06 ;**
- archivage **E06** des valeurs de variables mesurées **Vvm** dans le deuxième serveur d'archivage **6 ;**
- entrée **E07** de valeurs de paramètres **Vpe** ayant une influence sur la consommation énergétique de l'ouvrage et considéré comme vraies sur la première période **i ;** et
- simulation **E08** par un simulateur **8** de la consommation énergétique simulée **Cs$_i$** sur la première période i à partir des valeurs de variables **Vvm** archivées et des valeurs de paramètres **Vpe** et selon un modèle de simulation.

Ce bilan de consommation simulée **Cs$_i$** renseigne sur la consommation énergétique qu'aurait dû avoir l'ouvrage si les variables et les paramètres étaient réellement ceux qui s'appliquent pour l'ouvrage.

Le modèle de simulation peut être un modèle de simulation standard et reconnu, un ensemble d'équations non linéaires adapté à l'ouvrage et à son usage, ou un modèle simplifié (par exemple par *datamining* ou extraction de connaissance à partir de données en français).

Le modèle de simulation peut être un modèle de simulation thermodynamique prenant en compte les phénomènes de conduction, de convection, de rayonnement au sein de l'ouvrage et également entre l'ouvrage et son environnement. Il applique les lois de la conservation de masse et de la conservation d'énergie. Il peut être effectué graduellement, d'abord sur un modèle simplifiée en monozone (l'ouvrage est considéré comme une zone unique) pour connaître une performance globale, et ensuite sur un modèle multizone (l'ouvrage est découpé en zones) pour obtenir une répartition de performance suivant des zones.

Le procédé de la figure 1 comprend ensuite une étape de comparaison **E09** par un comparateur **9** d'un rapport $\Delta$**C%** à un seuil **S.** Le rapport $\Delta$**C%** est calculé en divisant une différence relative entre la consommation énergétique mesurée **Cm$_i$**, obtenue à partir des valeurs de consommation énergétique mesurées **Vcm,** et la consommation énergétique simulée **Cs$_i$** par la consommation énergétique mesurée **Cm$_i$** :

$$\Delta C\% = 100 \cdot \left| \frac{Cm_i - Cs_i}{Cm_i} \right|$$

La comparaison à ce seuil **S** permet de savoir si le modèle de simulation considéré est valide ou non.

Dans le cas où $\Delta$**C% > S** alors le modèle ne peut être validé car la trop grande différence entre la consommation énergétique mesurée **Cm$_i$** et la consommation énergétique simulée **Cs$_i$** traduit l'utilisation d'un modèle de simulation non adapté qui ne peut refléter la réalité de la consommation énergétique de l'ouvrage, par exemple parce que la pondération des variables et/ou paramètres n'est pas correcte et donc les postes de consommation d'énergie ne sont pas suffisamment connus pour établir une bonne prévision.

Dans ce cas le procédé comprend une étape de modification **E11** du modèle de simulation par un module de modification **11.** Une fois la modèle de simulation modifié, l'étape de simulation **E08** par le simulateur **8** est reconduite selon le nouveau modèle de simulation ainsi modifié pour obtenir une nouvelle consommation énergétique simulée **Cm$_i$.** L'étape de comparaison **E09** est réitérée.

La modification **E11** du modèle de simulation a lieu tant que $\Delta$**C > S.**

La modification **E11** peut porter sur le modèle de simulation lui-même, pour le cas d'un ensemble d'équations non linéaires adapté à l'ouvrage et à son usage, ou d'un modèle simplifié (modification des relations entre variables et paramètres - coefficients et équations), ou simplement sur des coefficients du modèle de simulation pour le cas d'un modèle de simulation standard et reconnu (sans autre modification des relations entre variables et paramètres, par exemple les équations ne sont pas modifiées).

Ainsi le modèle de simulation est affiné et correspond davantage à la réalité. Ceci permet de prendre en compte l'usure ou la vétusté du/des bâtiment(s) ou/et des équipements, voire rénovation ou remplacement s'il

Une fois que ∆**C%** ≤ **S,** une analyse peut être conduite pour déterminer les changements par rapport à la période antérieure **i-1.** Ces changements peuvent être une utilisation différente de l'ouvrage, un dysfonctionnement survenu au cours de la première période i touchant par exemple un équipement électrique de l'ouvrage ou touchant un capteur **2** ou **4** nécessitant une réactualisation des valeurs de paramètre **Vpa.** La comparaison du modèle utilisé pour la première consommation simulée **Cs$_i$** pour la première période i avec le dernier modèle utilisé pour la détermination de la consommation simulée **Cs$_i$** avant que ∆**C%** ≤ **S** permet d'identifier ces changements.

Une fois le changement identifié, le modèle de simulation est validé et l'étape de prévision **E10** est réalisée à partir d'au moins une partie des valeurs de variables mesurées **Vvm,** d'au moins une partie des valeurs de paramètres **Vpe** entrées et de valeurs de paramètres **Vpa** actualisées, prenant en compte par exemple le comportement d'usagers sur l'utilisation de l'ouvrage ou des équipements, la prévision météorologique pour la période **i+1,** de nouveaux équipements électriques...

Toutes les étapes ne sont pas nécessairement appliquées. Par exemple, il est possible d'envisager un procédé pour le suivi et la prévision de la consommation énergétique sans l'étape de correction **E02** ou sans l'établissement de bilan de consommation **Cm$_i$** ou **Cs$_i$.** Dans ce dernier cas, le comparateur **9** utilise les valeurs de consommation énergétique **Vcm** archivées et les valeurs de variables archivées **Vvm.**

Les étapes de correction **E02, E05** peuvent comprendre :

- une sous-étape d'identification et suppression des valeurs aberrantes par une unité d'identification et suppression; et
- une sous-étape de remplacement de ces valeurs aberrantes par d'autres valeurs obtenues via une méthode déterministe ou empirique par une unité de remplacement.

L'identification des valeurs aberrantes peut être effectuée par dérivations successives sur les valeurs mesurées. Pour cela, l'unité d'identification et suppression détermine des valeurs de dérivées première et/ou seconde à partir des valeurs mesurées et compare à au moins un seuil les valeurs de dérivées déterminées.

Le remplacement des valeurs aberrantes dépend l'étape de correction dont il s'agit.

Si l'étape de correction **E02** concerne la mesure de valeurs de consommation énergétique, la méthode utilisée est une méthode empirique basée sur les mesures réalisées pendant une période antérieure à la première période **i.** Si de telles mesures (de la période antérieure) sont indisponibles, l'intervalle de temps pendant lequel les valeurs mesurées sont aberrantes est simplement ignoré.

Si l'étape de correction **E05** concerne la mesure de valeurs de variables ou paramètres, la méthode utilisée peut être une méthode empirique basée sur les mesures réalisées pendant une période antérieure à la première période **i,** ou une méthode déterministe si les mesures correspondant à la période antérieure sont indisponibles.

Dans les deux cas, si la valeur aberrante est isolée, celle-ci peut être remplacée par la moyenne des valeurs mesurées qui l'entourent.

À chaque valeur mesurée ou corrigée peut être associée une valeur de paramètre de qualité. La valeur de ce paramètre de qualité indique si la valeur est une valeur mesurée ou corrigée.

*Application du procédé*

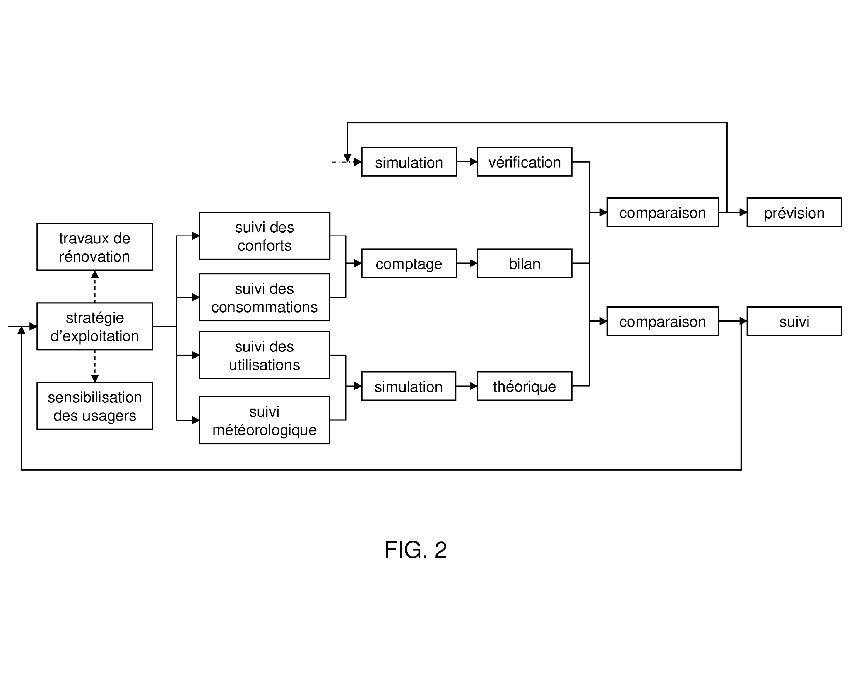

En référence à la figure 2 est ci-après décrite une application du procédé de l'invention.

Dans la figure 2, contrairement à la figure 1, les étapes conduisant au suivi et celles conduisant à la prévision sont séparées, ce qui ne doit pas être compris comme une limitation du procédé.

L'application qui est décrite est dédiée au secteur résidentiel ou tertiaire et permet l'établissement de stratégies d'exploitation de l'ouvrage qui sera illustré ici par un bâtiment.

Cette application permet notamment d'établir une stratégie d'exploitation du bâtiment et d'identifier des actions à entreprendre afin de diminuer ou rationnaliser la consommation énergétique du bâtiment.

La stratégie d'exploitation de la figure 2 pour le bâtiment repose sur plusieurs suivis : suivi des conforts, suivi des consommations, suivi des utilisations et suivi météorologique.

Concernant le suivi des conforts, créer une ambiance confortable est la première fonction d'un bâtiment. Le niveau de confort est relativement proportionnel à la consommation d'énergie. On peut déterminer quatre types de confort : thermique, visuel, acoustique et olfactif. Les conforts thermique, olfactif et visuel ont des impacts directs et conséquents sur la consommation d'énergie (chauffage, climatisation, ventilation et éclairage).

Les capteurs utilisés pour assurer le suivi de confort peuvent être choisis parmi des capteurs adaptés au suivi d'au moins un des paramètres suivants : température sèche ambiante de consigne, température sèche ambiante réelle, humidité relative de consigne, humidité relative ambiante réelle (ces quatre paramètres concernent principalement le confort thermique), et éclairement de zones (qui concerne principalement le confort visuel).

Les consommations énergétiques traduisent le coût de la création d'une ambiance confortable au sein du bâtiment.

Les capteurs pour assurer le suivi des consommations peuvent être choisis parmi des capteurs adaptés au suivi d'au moins un des paramètres suivants : consommation d'électricité (puissance électrique appelée...), consommation de gaz (débit, volume...), consommation d'eau froide (débit, température, température aller-retour, puissance frigorifique...), consommation d'eau chaude (débit, température aller-retour, puissance calorifique...), voire aussi consommation de frigorigène, de déchets.

Concernant le suivi des utilisations, il permet de connaître en permanence l'état et la durée de fonctionnement des équipements. Il permet également de connaître le profil d'utilisation du bâtiment (utilisation industrielle, commerciale, résidentielle...) afin d'anticiper d'éventuels dysfonctionnements et de préserver la performance énergétique des équipements et du bâtiment. Il sert également de base à la prévision de la consommation énergétique.

Les capteurs utilisés pour assurer le suivi des utilisations peuvent être choisis parmi des capteurs adaptés au suivi d'au moins un des paramètres suivants : état et durée de fonctionnement d'équipements de production thermique, état et durée de fonctionnement des d'équipements d'émission et de diffusion, état et durée de fonctionnement des circulateurs, état et durée de fonctionnement des équipements bureautiques, état et durée de fonctionnement des équipements électroménagers, état et durée de fonctionnement du système d'éclairage électrique, profil d'occupation du bâtiment (densité, durée de présence...), taux de renouvellement d'air du bâtiment (débit...).

Enfin, concernant le suivi météorologique, celui-ci sert à comprendre et à expliquer l'état et la durée des équipements et à la vérification et la prévision de la performance énergétique (consommation et efficacité).

Les capteurs utilisés pour assurer le suivi météorologique peuvent être choisis aussi parmi les capteurs adaptés au suivi de la température sèche de l'air extérieur, de l'humidité extérieure, de la température de la voûte céleste, du rayonnement solaire, du vent (vitesse et direction).

La température sèche de l'air extérieur peut, à elle seule, expliquer une surconsommation énergétique liée au chauffage du bâtiment. Par contre une surconsommation liée au refroidissement nécessite à la fois les suivis de la température extérieure et du rayonnement solaire.

Les suivis des conforts et des consommations fournissent la consommation énergétique mesurée $Cm_i$ sur une première période $i$. Les suivis des utilisations et météorologique fournissent des valeurs de variables et paramètres pour effectuer la simulation de la consommation énergétique simulée $Cs_i$ sur la première période $i$.

Une comparaison entre les consommations énergétiques mesurée et simulée permet de d'effectuer un suivi des performances énergétiques et de prévoir les performances énergétiques futures. Afin de permettre une prévision fiable, il faut identifier les dysfonctionnements qui permettront également de déterminer les actions à entreprendre pour améliorer les performances énergétiques du bâtiment.

Tant que rapport $\Delta C\%$ est supérieur à un seuil **S**, le modèle utilisé pour la simulation ne correspond pas la réalité, par exemple, parce que le bâtiment ou des équipements sont endommagés ou dysfonctionnant, ou que l'utilisation faite du bâtiment et des équipements ne correspond pas à ce qui a été envisagé lors de la détermination du modèle.

Le modèle est alors modifié.

Par exemple, dans l'hypothèse ou un modèle de simulation comprend un ensemble d'équations telles que :

$$y_k = \sum a_{kj}.x_{kj}$$

$k$ représentant un poste de consommation énergétique, réparti soit par nature de la source d'énergie - électricité, gaz, eau, déchet... - soit par groupe d'équipements consommant de l'énergie - par appartement dans le cas d'un bâtiment résidentiel par exemple ;

$a_{kj}$ représentant une pondération de la variable ou du paramètre $j$ ;

$X_{kj}$ représentant la valeur de la variable ou du paramètre $j$ ; et

$y_k$ représentant la consommation simulée pour le poste de consommation énergétique $k$ ;

une modification du modèle de simulation consiste en une modification de l'ensemble des coefficients de pondération des variables et des paramètres.

Après chaque modification, une vérification est faite en introduisant les valeurs de variables et paramètres **Vvm** et **Vpe** dans le nouveau modèle pour obtenir une nouvelle consommation énergétique simulée $Cs_i$. Puis une comparaison est renouvelée.

Une fois le rapport $\Delta C\%$ inférieur au seuil **S,** il est possible d'identifier les dysfonctionnements.

La confrontation entre l'ensemble des coefficients de pondération des variables et des paramètres utilisés lors de la première simulation (permettant le suivi) et lors de la dernière simulation (pour obtenir $\Delta C\% \leq$ **S)** permet d'identifier d'éventuels dysfonctionnements. Par exemple si le coefficient $a_{mn}$ est fortement modifié, il conviendrait de vérifier le bon fonctionnement du ou des capteurs mesurant la consommation énergétique du poste $m$ et/ou du ou des capteurs mesurant la variable $n$ ou de vérifier si le paramètre $n$ choisi est correct.

Si un capteur ne fonctionne pas correctement, il conviendra alors de le changer ou le réparer. Le dysfonctionnement du capteur peut alors expliquer la modification importante du coefficient $a_{mn}$.

Si tous les capteurs fonctionnent correctement, le dysfonctionnement peut provenir des équipements utilisés pour le poste $m$ et plus particulièrement celui correspondant à la variable $n$ pour une mauvaise utilisation de celui-ci, ou d'un paramètre n déterminé de manière incorrecte.

La stratégie d'exploitation est ensuite à redéfinir.

Dans le cas d'un dysfonctionnement d'un équipement, on peut choisir de le changer ou le réparer (par exemple la chaudière) ou d'entreprendre des travaux pour l'améliorer (remplacement des fenêtres par exemple). On peut également choisir de ne rien y faire.

Dans le cas d'une surconsommation énergétique, si celle-ci traduit en réalité une mauvaise utilisation de l'équipement, on peut choisir de sensibiliser les usagers sur l'utilisation des équipements ou l'ouvrage afin de réduire la consommation.

Dans tous les cas, afin d'effectuer une prévision pour la période iT+1 postérieure à la première période **iT,** les coefficients de pondération du modèle de simulation doivent être actualisés selon les actions qui auront ou non été entreprises et selon de nouvelles informations quant à l'utilisation du bâtiment (départ ou arrivée d'usagers, ajout ou suppression d'équipements électriques, par exemple) (valeurs de paramètres actualisées **Vpa).** On obtient alors une prévision pour la période **i+1.**

## Revendications

1. Procédé pour le suivi et la prévision de la consommation et l'efficacité énergétiques d'au moins un ouvrage, comprenant les étapes de :

     - mesure (E01) par des premiers capteurs (1) adaptés de valeurs de consommation énergétique (Vcm) sur une première période (i) et à intervalles réguliers ;
     - archivage (E03) des valeurs de consommation énergétique mesurées (Vcm) dans un premier serveur d'archivage (3) ;
     - mesure (E04) par des deuxièmes capteurs (4) adaptés de valeurs de variables (Vvm) ayant une influence sur la consommation énergétique sur la première période (i) et à intervalles réguliers ;
     - archivage (E06) des valeurs de variables mesurées (Vvm) dans un deuxième serveur d'archivage (6) ;
     - entrée (E07) de valeurs de paramètres (Vpe) ayant une influence sur la consommation énergétique de l'ouvrage et considéré comme vraies sur la première période (i) ;
     - simulation (E08) par un simulateur (8) d'une consommation énergétique simulée $(Cs_i)$ sur la première période (i) à partir des valeurs de variables (Vvm) archivées et des valeurs de paramètres (Vpe) et selon un modèle de simulation ;
     - prévision (E10) par un module de prévision (10) d'une consommation énergétique $(Cp_{i+1})$ pour une deuxième période (i+1) postérieure à la première période (i) à partir des valeurs de consommation énergétique (Vcm) archivées, des valeurs de variables (Vvm) archivées et des valeurs de paramètres (Vpe) entrées.

2. Procédé selon la revendication 1, comprenant en plus une étape de correction (E05) par un module de correction (5) des valeurs de variables aberrantes avant leur archivage (E06).

3. Procédé selon la revendication 2, dans lequel l'étape de correction (E05) comprend :

     - une sous-étape d'identification et suppression des valeurs de variables aberrantes par une unité d'identification et suppression ; et
     - une sous-étape de remplacement (E0) de ces valeurs de variables aberrantes par d'autres valeurs obtenues via une méthode déterministe ou empirique par une unité de remplacement.

4. Procédé selon l'une des revendications 1 à 3, comprenant en plus une étape de comparaison (E09) par un comparateur (9) d'un rapport ($\Delta$C%) à un seuil (S), le rapport étant déterminé en fonction d'une consommation énergétique mesurée $(Cm_i)$, obtenue à partir des valeurs de consommation énergétique mesurées (Vcm), et de la consommation énergétique simulée $(Cs_i)$.

5. Procédé selon la revendication 4, comprenant en plus une étape de modification (E11) du modèle de simulation par un module de modification (11) si le rapport ($\Delta$C%) est supérieur au seuil (S), et une itération de l'étape de simulation (E08) par le simulateur (8) selon le modèle de simulation modifié, ainsi que de l'étape de comparaison (E09) tant que le rapport ($\Delta$C%) est supérieur au seuil (S).

6. Procédé selon l'une des revendications 4 ou 5, dans lequel l'étape de prévision (E10) est réalisée lorsque le rapport ($\Delta$C%) est inférieure au seuil (S) à partir d'au moins une partie des valeurs de variables mesurées (Vvm), d'au moins une partie des valeurs de paramètres (Vpe) entrées, de valeurs de variables actualisées (Vva) et de valeurs de paramètres (Vpa) actualisées.

7. Système pour le suivi et la prévision de la consommation énergétique d'au moins un ouvrage, comprenant :

     - au moins un premier capteur (1) adapté à la mesure (E01) de valeurs de consommation énergétique (Vcm) ;
     - un premier serveur d'archivage (3) pour l'archivage (E03) des valeurs de consommation énergétique (Vcm) mesurées par le capteur (1);

- au moins un deuxième capteur (4) adapté à la mesure (E04) de valeurs de variables (Vvm) ayant une influence sur la consommation énergétique ;

- un deuxième serveur d'archivage (5) pour l'archivage (E06) des valeurs de variables mesurées (Vvm) par le deuxième capteur (4) ; et

- un module de prévision (10) pour la prévision (E10) d'une consommation énergétique ($Cp_{i+1}$) pour une deuxième période (i+1) postérieure à la première période à partir des valeurs de consommation énergétique (Vcm) archivées, des valeurs de variables (Vvm) archivées et de valeurs de paramètres (Vpe) entrées ;

- un simulateur (8) pour la simulation (E08) d'une consommation énergétique simulée ($Cs_i$) sur la première période (i) à partir des valeurs de variables (Vvm) archivées et des valeurs de paramètres (Vpe) et selon un modèle de simulation ;

- un comparateur (9) pour la comparaison (E09) d'un rapport ($\Delta C\%$) à un seuil (S), le rapport étant déterminé en fonction d'une consommation énergétique mesurée ($Cm_i$), obtenue à partir des valeurs de consommation énergétique mesurées (Vcm), et de la consommation énergétique simulée ($Cs_i$); et

- un module de modification (11) pour la modification (E11) du modèle de simulation si le rapport ($\Delta C\%$) est supérieur au seuil (S).

8. Système selon la revendication 7, comprenant en outre un module de correction (5) pour la correction (E05) de valeurs de variables aberrantes avant leur archivage (E06).

FIG. 1

FIG. 2

EP 2 360 633 A1

FIG. 3

Europäisches
Patentamt

European
Patent Office

Office européen
des brevets

**RAPPORT DE RECHERCHE EUROPEENNE**

Numéro de la demande

EP 11 15 4000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/061091 A1 (AMARATUNGA MOHAN MARK [US] ET AL) 27 mars 2003 (2003-03-27) * le document en entier * ----- | 1-8 | INV. G06Q10/00 G06Q50/00 |
| X | US 7 552 033 B1 (CULP CHARLES H [US] ET AL) 23 juin 2009 (2009-06-23) * abrégé * * figures 1-3B * * colonne 1, ligne 6 - colonne 2, ligne 55 * * colonne 3, ligne 12 - colonne 12, ligne 8 * * revendications 1-39 * ----- | 1-8 | |
| X | US 7 356 548 B1 (CULP CHARLES H [US] ET AL) 8 avril 2008 (2008-04-08) * abrégé * * figures 1-5 * * colonne 1, ligne 5 - colonne 2, ligne 55 * * colonne 3, ligne 22 - colonne 12, ligne 30 * * revendications 1-45 * ----- | 1-8 | |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| La Haye | 10 mars 2011 | Bassanini, Anna |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 15 4000

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-03-2011

| Document brevet cité au rapport de recherche | Date de publication | Membre(s) de la famille de brevet(s) | Date de publication |
|---|---|---|---|
| US 2003061091 A1 | 27-03-2003 | AUCUN | |
| US 7552033 B1 | 23-06-2009 | AUCUN | |
| US 7356548 B1 | 08-04-2008 | US 2009012654 A1 | 08-01-2009 |

EPO FORM P0460

Pour tout renseignement concernant cette annexe : voir Journal Officiel de l'Office européen des brevets, No.12/82